# EUROPEAN PATENT APPLICATION

(11) **EP 2 733 182 A1**
(43) Date of publication of application: **21.05.2014**
(21) Application number: 13192417.7
(22) Date of filing: 12.11.2013
(51) Int. Cl.: C09D 11/10, B41M 3/14

(54) **Method for making safety paper with chemical watermark**

(30) Priority: 14.11.2012 IT CO20120057
(71) Applicant: Tecchia, Michele, 16148 Genova (IT)
(72) Inventor: Tecchia, Michele, 16148 Genova (IT)
(74) Representative: De Ros, Alberto

(57) **Abstract**

The method is used for making watermarked safety paper and comprises the usual steps of a process of silk-screen printing on paper; moreover, a UV curing compound is used, adapted to alter the compactness and/or thickness of the paper fibers; the compound comprises urethane-acrylate resin and polyol-acrylate in the minimum total amount of 90% and maximum amount of 96%, and a low molecular weight methyl-methacrylate-n-butyl methacrylate copolymer, obtained from methyl and n-butyl esters of methacrylic acid, in the amount of 4-10%; the urethane-acrylate resin and the polyol-acrylate differ by a maximum percentage of 3%.

## Description

### Field of the invention

The present invention relates to the field of safety paper.

### Background art

Paper has a porous structure, essentially consisting of fibrous particles of vegetable origin, having a length from 2-3 mm to less than 1 mm. The fibers are braided and held together by chemical bonds to build a compact layer.

In the paper industry, the watermark is a sign which appears through a series of lighter or darker lines imprinted on the sheets, and is obtained through the provision of a larger or smaller number of fibers when manufacturing the paper. Alternatively, the sign is imprinted on the finished sheet of paper using a pressure which also in this case affects the thickness of the fibers.

The method used when manufacturing the sheet of paper technically contemplates modifying the metal plane of the template, placing a mold on the sieve, through which the mixture of cotton and/or cellulose is filtered and deposited, thus creating a considerable reduction of the paper thickness in that area. The transparency of the watermark is actually determined by the thin cellulose layer deposited where the mold is placed.

On the other hand, the method used on the finished sheet of paper uses a "dandy roll" which leaves the impression of the watermark on the sheet of paper while it is still damp, thus causing the displacement of the fibers subjected to the pressure of the pattern fixed on the canvas of the roll itself. The clear areas of the watermark are obtained with protrusions patterned onto the canvas, while the dark areas are obtained with indentations.

The drawback of the above-described method is the high processing cost and the need to make specific molds every time, which involves relatively long times; for these reasons, the production of watermarked paper be means of these methods (which are of "mechanical" type) is not convenient, especially in the case of limited runs.

### Summary of the invention

It is the main object of the present invention to provide a method for making the watermark in an alternative way; specifically, the inventor set the objective of creating the watermark "chemically".

This and other objects are achieved by the method having the technical features described in claim 1, which forms an integral part of the present description. Advantageous aspects of the present invention are the subject of the dependent claims and they form an integral part of the present description as well.

The idea behind the present invention is to make a watermarked safety paper by means of a silk-screen printing process; in particular, by using a specific compound, i.e. a UV curing compound during the inking step contemplated in the silk-screen printing method.

Further features and advantages of the present invention become apparent from the following description of some embodiments thereof, provided by way of nonlimiting examples, and from the accompanying drawings.

### List of figures

Fig. 1 shows a chromatogram of an example of a compound that can be used in the method of the present invention;
Fig. 2 shows a flowchart where there are shown both the steps of a traditional silk-screen printing method and the steps of a non-traditional printing method, i.e. according to the present invention, for making chemical watermark;
Fig. 3 diagrammatically shows a sectional view of the fibers of a sheet of paper before and after the application of a process according to the present invention.

### Detailed description

The steps of the method used for making the safety paper with chemical watermark are substantially those typical and usual of silk-screen printing.

Silk-screen printing is a technique which allows images and graphics to be printed on any support or surface using a very fine, regular yarn fabric (called "printing textile"), through which ink is deposited on a support by using the previously made free areas. In fact, the ink passes through the tiny holes in the gaps left by weft and warp threads of the printing textile, to settle then on the surface to be printed. In the method according to the present invention, the printing textile is prepared by transferring thereon, with the methods already in use in the field of silk-screen printing, the sign that will represent the (chemical) watermark. The printing textile is then stretched on a frame, forming the silk-screen printing frame which is placed on the support to be printed, which in the case of the present invention is of paper type. As in the traditional silk-screen printing method, ink is spread on the frame and by means of the so-called "doctor blade", pressure is exerted as required to push the ink across the die, through the open areas, so that it settles on the support.

The inking step depends on the type of ink used.

Typically, silk-screen printing inks can be solvent-based, water-based or UV-drying solvents, consisting of pigments, binders and additives.

Their essential feature is thixotropy, that is the capacity of a liquid to vary its viscosity under the action of mechanical forces (or upon temperature changes) and return to the previous status (and to the previous temperature) when the mechanical action is stopped. This property allows the ink to pass through the textile meshes of the frame only under the pressure exerted by the printing doctor blade and to return almost immediately to the previous viscosity without widening too much on the support to be silk-screen printed and without dripping from the frame.

The idea behind the present invention is to make a watermarked safety paper by means of a silk-screen printing process.

In the method according to the present invention, the silk-screen ink which is spread on the frame is of ultraviolet type (UV in brief).

In UV inks, the curing step leading to hardening is caused by a chemical reaction during the emission of ultraviolet radiation in the UV drying unit. UV curing starts due to the energy absorbed by specific groups of molecules called photoinitiators. During drying, the organic photoinitiators, which are specifically targeted for a certain type of resin, release negatively charged radicals or positively charged polyatomic ions (complex cations). These decomposition products react with the free molecular groups (liquid ligands) of resins, thus triggering the curing process. Three-dimensional bonds are formed between the molecules in fractions of a second, transforming the liquid binder into a solid film.

However, photoinitiators have a characteristic smell that, after drying, decreases in radical UV photo-crosslinking coats and inks and disappears almost completely in cationic UV photo-crosslinking inks. On the other hand, however, cationic photo-crosslinking is much slower, so that, from the operational point of view, it can be a problem with large thicknesses of the paper support.

In order to overcome this problem, an ink formulation has been developed which, besides being able to generate the watermark effect, allows this typical smell to be reduced.

The reduction of the smell has been obtained by avoiding the use of photoinitiators such as 1,6 hexanediol acrylate, which is a photoinitiator generally used in traditional silk-screen printing.

Once the compound, passing through the open spaces of the printing frame, is deposited on the paper support to be watermarked, the curing reaction takes place during which the UV rays react with the photoinitiators, thus generating the complex radicals or cations which in turn react with the liquid binder, achieving the three-dimensional crosslinking of monomers and oligomers which leads to the fixing of the solid film.

In this step, the compound alters the structure of the paper fibers which become thinner and take a greater compactness, generating a transparency effect compared to untreated fibers.

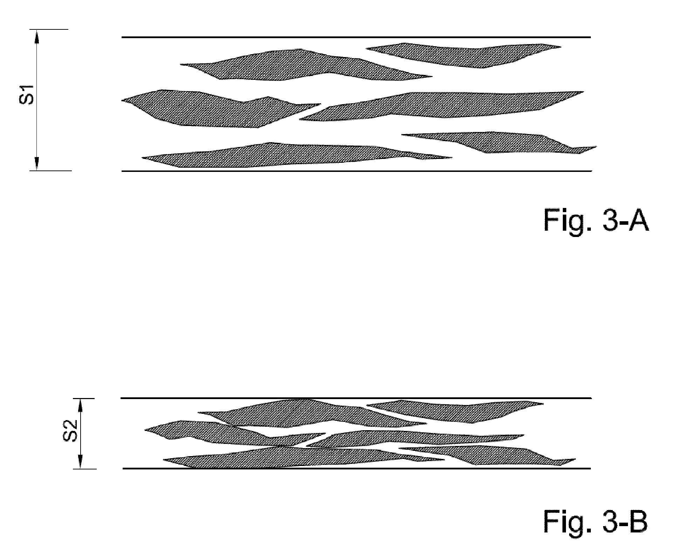

Fig. 3 shows the effect of an example of the above description. Fig. 3-A shows a small section of a sheet of paper and its fibers before the application of the process; its thickness is indicated as S1. Fig. 3-B shows the same section of the sheet of paper with its fibers after the application of the process; its thickness is indicated as S2; the thickness of the sheet is smaller (the difference between S1 and S2 is deliberately exaggerated for clarity in the figure) and the compactness of the fibers has increased.

Thereby, a final effect of light-and-shade and opacity variation is obtained which is very similar to that of traditional watermark, obtained instead with alterations of the fibers of the physical type (reduction in the number of fibers) or mechanical type (crushing of the fibers).

The fixative used in the method according to the invention also exhibits a quick drying on paper.

The shade of gray can be also scaled using special pigments, so as to intensify the stronger or weaker thinning of the cellulose fibers even graphically.

According to the present invention, in order to obtain a safety paper with chemical watermark, a compound having the following composition can be used in the silk-screen printing process, precisely in the inking step:
1 - 45-48% urethane-acrylate resin
2 - 45-48% polyol-acrylate
3 - 4-10% acrylic resin

Urethane-acrylate resin is a component formulated to act when exposed to UV light, therefore it is employed to provide bonding/coating with a very strong hold. The crosslinking and the depth of action depend on time, quality of the UV light and substrate type.

A polyol is an alcohol (R-OH) with several alcoholic groups to which various functional groups can bind. Polyesters are another class of polyols, which are formed by condensation between diols and dicarboxylic acids (and derivatives thereof). The OH group can act as a bridge between different functional units, thus creating the polymer. In the compound described, polyol-acrylate serves the function of photoinitiator.

Acrylic resin is a low molecular weight methyl-methacrylate-n-butyl methacrylate copolymer obtained from methyl and n-butyl esters of methacrylic acid.

Among the acrylic resins which can be employed in the compound, the best one is that known under the trade name ELVACITE 2013® from Lucite International, Inc. The composition includes the use of urethane-acrylate resin and polyol acrylate in equal parts and the addition, for the remaining part, of acrylic resin preferably known under the above-indicated trade name.

The composition is suitable for a grammage from 70 to 250 grams.

In summary, a method according to the invention includes the following steps:
step 1: preparing the silk-screen printing die by means of known methods;
step 2: depositing the above-described fixative on the sheet by using a doctor blade;
step 3: curing the fixative with UV rays.

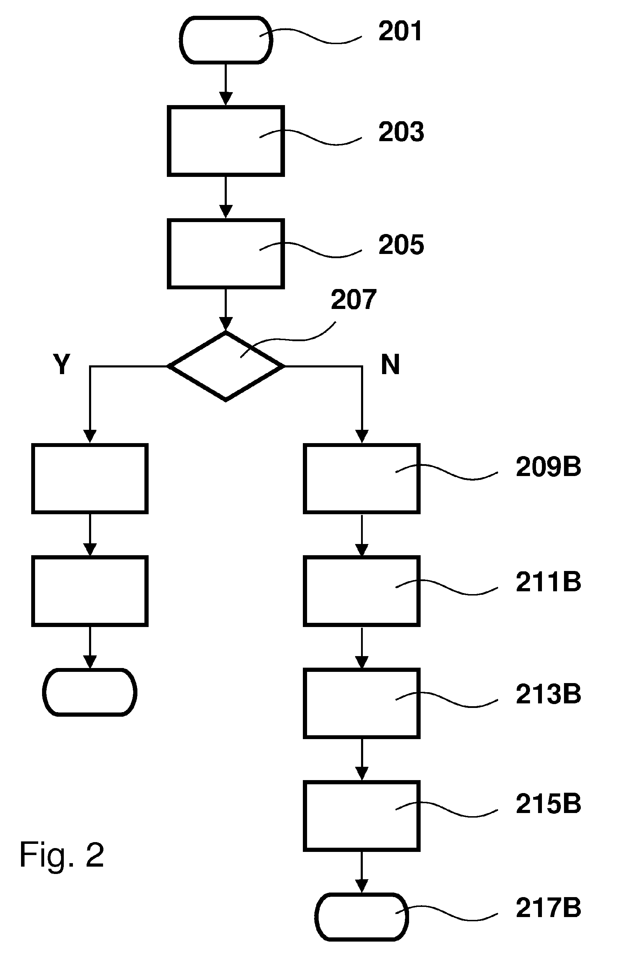

The flow chart in Fig. 2 allows an even better understanding of the difference between a traditional silk-screen printing method and a non-traditional printing method, i.e. according to the present invention, for making chemical watermarks. Step 201 corresponds to the beginning of the silk-screen printing process, both of the traditional and non-traditional type.

Step 203 includes the preparation of the printing textile by transferring thereon, with the processes already known in silk-screen printing, the pattern to be printed (in the case of the chemical watermark, the pattern will be a simple "sign").

In step 205, the printing textile is stretched over a frame and placed on the paper support to be printed.

Step 207 corresponds to the choice between the traditional process (arrow "Y" and side "A" of the flow chart) and the non-traditional process (arrow "N" and side "B" of the flow chart).

In step 209A, the traditional silk-screen printing ink is spread on the frame by exerting, with the doctor blade, the pressure required to push it across the die through the open areas.

In step 211 A, the ink is deposited on the support.

Step 217A corresponds to the end of the traditional process.

In step 209B, the UV curing silk-screen printing ink (as described above) is spread on the frame by exerting, with the doctor blade, the pressure required to push it across the die.

In step 211 B, the ink is deposited on the support.

Step 213B includes the occurrence of the curing step into a UV drying unit: the UV rays react with the photoinitiators, thus generating the complex radicals or cations which in turn react with the liquid binder, achieving the three-dimensional crosslinking of monomers and oligomers which leads to the fixing of the solid film. In step 215B, the compound alters the structure of the paper fibers which become thinner and take a greater compactness, thus generating a transparency effect compared to untreated fibers.

Step 217B corresponds to the end of the non-traditional process, and thus to the making of the "chemical watermark".

Using the fixative with the above-described features, a final effect of light-variable light-and-shade is obtained, which is very similar to that obtained with the traditional watermarking methods. The effect of increased transparency is due to a greater compactness of the fibers which become thinner compared to those not treated, just like in the traditional watermarking methods.

Obviously, such a method has considerably lower costs than the traditional methods of producing watermarks and therefore it makes it advantageous to use the chemical watermark also for limited runs, in addition to reducing the production time.

Another advantage obtained by using a fixative thus made is the total rewritability of the paper which, upon the treatment, does not lose its strength features and can thus undergo any next printing stress, also of laser type.

The reason for this is to be found in the deposition of the solid film which on the one side creates a chemical transparency due to thinning and to the greater compactness of the fibers, but on the other hand acts as a protection film, thus hardening the thinned fibers.

The chemical watermark obtained using the method described is particularly suitable for obtaining safety paper typically used by banks and insurance companies since it is difficult to be falsified.

Obviously, the compound may have further features such as the presence of photo-active components that, in the case of photocopying of the original document, are activated with the strong illumination of the lamp of the photocopier itself, immediately making the original unreadable.

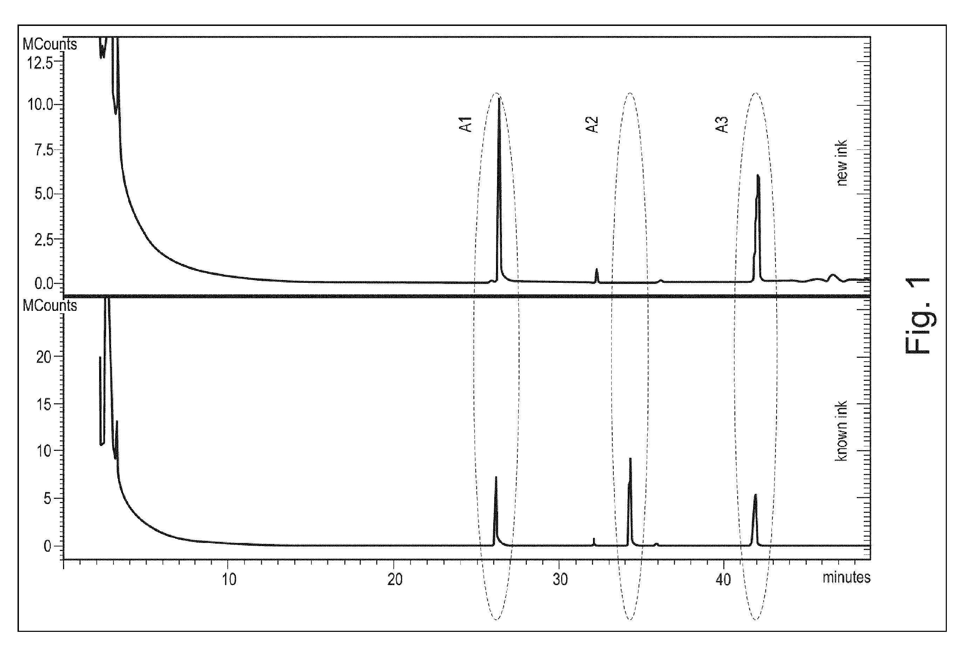

The accompanying comparative graph (Fig. 1) was obtained by means of the chromatographic examination of the compound, where no peaks at 34 minutes are observed (see area A2), which peaks are typical of the ingredient 1,6 hexanediol diacrylate, absent in the compound according to the invention and present in the usual inks, and where peaks at 26 minutes (see area A1) and 42 minutes (see area A3) are present, which peaks are typical of the usual inks; in this graph, the abscissa corresponds to the time in minutes and the ordinate corresponds to the counting of peaks ("Mcounts "), which value indicates the amount of molecular ions of a certain weight that reach the chromatograph detector.

## Claims

1. A method for making watermarked safety paper comprising the steps of a process of silk-screen printing on paper, wherein a UV curing compound is used, which is adapted to alter the compactness and/or thickness of the paper fibers, wherein said compound comprises urethane-acrylate resin and polyol-acrylate in the minimum total amount of 90% and maximum amount of 96%, and a low molecular weight methyl-methacrylate-n-butyl methacrylate copolymer, obtained from methyl and n-butyl esters of methacrylic acid, in the amount of 4-10%, and wherein said urethane-acrylate resin and said polyol-acrylate differ by a maximum percentage of 3%.

2. A method according to claim 1, **characterized in that** it comprises 45-48% urethane-acrylate resin, 45-48% polyol-acrylate and 4-10% of a low molecular weight methyl-methacrylate-n-butyl methacrylate copolymer, obtained from methyl and n-butyl esters of methacrylic acid.

3. A method according to claim 1 or 2, **characterized by** the further presence of photo-active components adapted to be activated when impinged by a strong illumination, in particular the illumination of a photocopier lamp.

4. A method according to claim 3, **characterized in that** it only contains: a urethane-acrylate resin, a polyol-acrylate, an acrylic resin, a photo-active component, wherein the acrylic resin is a low molecular weight methyl-methacrylate-n-butyl methacrylate copolymer, obtained from methyl and n-butyl esters of methacrylic acid.

5. A method according to any one of the preceding claims, wherein said UV curing compound is used during the inking step contemplated in said process of silk-screen printing on paper.
